(19) **Europäisches Patentamt**
**European Patent Office**
**Office européen des brevets**

(11) **EP 3 130 438 A1**

(12) **EUROPÄISCHE PATENTANMELDUNG**

(43) Veröffentlichungstag:
**15.02.2017 Patentblatt 2017/07**

(21) Anmeldenummer: **16187437.5**

(22) Anmeldetag: **21.07.2014**

(51) Int Cl.:
**B29B 13/02** (2006.01)     **B29C 47/82** (2006.01)
**F27D 3/00** (2006.01)     **B29L 31/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2013 DE 102013219684**

(62) Dokumentnummer(n) der früheren Anmeldung(en) nach Art. 76 EPÜ:
**14177786.2 / 2 862 686**

(71) Anmelder: **Krones AG**
**93073 Neutraubling (DE)**

(72) Erfinder: **Friedlaender, Thomas**
**93073 Neutraubling (DE)**

(74) Vertreter: **Grünecker Patent- und Rechtsanwälte PartG mbB**
**Leopoldstraße 4**
**80802 München (DE)**

Bemerkungen:
Diese Anmeldung ist am 06-09-2016 als Teilanmeldung zu der unter INID-Code 62 erwähnten Anmeldung eingereicht worden.

(54) **VORRICHTUNG UND VERFAHREN ZUM ERWÄRMEN VON KUNSTSTOFFBRÖCKCHEN**

(57) Vorrichtung (200) und ein entsprechendes Verfahren zum Erwärmen von Kunststoffbröckchen (110), umfassend einen Heizbereich (202), in dem eingefüllte Kunststoffbröckchen (110) erwärmt werden können, und eine Heizeinrichtung, die geeignet ist, Wärme in den Heizbereich zu leiten, wobei die Vorrichtung (200) weiterhin in den Heizbereich (202) einbringbare Füllkörper (220) umfasst, die geeignet sind, aufgenommene Wärme im Heizbereich an die Kunststoffbröckchen abzugeben, wobei die Füllkörper (220) in dem Heizbereich (202) verortet ausgebildet sind.

Fig. 2a

## Beschreibung

Die vorliegende Erfindung betrifft eine Vorrichtung zum Erwärmen von Kunststoffbröckchen, wie beispielsweise recycelten PET-Flakes.

## Stand der Technik

Vorrichtungen zum Erwärmen von Kunststoffbröckchen, die beispielsweise aus recycelten Kunststoffflaschen gewonnen wurden, sind bekannt. So werden üblicherweise Systeme von Heizschnecken verwendet, in die die Kunststoffbröckchen eingeführt werden, und an deren Oberfläche sich die Kunststoffbröckchen erwärmen können. Kritische Faktoren für die gleichmäßige Erwärmung der Kunststoffbröckchen sind hier die Fläche der Heizvorrichtung, wie beispielsweise der Heizschnecke, der Grad der Durchmischung der Kunststoffbröckchen und die Art und Weise des Energieeintrags, beispielsweise, ob die Wärme mit Hilfe von Mikrowellen oder Infrarotstrahlung übertragen wird, oder der Wärmeaustausch direkt über physischen Kontakt mit der Heizvorrichtung geschieht.

## Aufgabe

Ausgehend vom Stand der Technik ist es die Aufgabe der vorliegenden Erfindung, eine verbesserte Vorrichtung zum Erwärmen von Kunststoffbröckchen bereitzustellen.

## Lösungen

Diese Aufgabe wird erfindungsgemäß durch die Vorrichtung nach Anspruch 1 zum Erwärmen von Kunststoffbröckchen und das Verfahren zum Erwärmen von Kunststoffbröckchen nach Anspruch 11 gelöst. Zweckmäßige Ausgestaltungen der Erfindung sind in den Unteransprüchen erfasst.

Die erfindungsgemäße Vorrichtung zum Erwärmen von Kunststoffbröckchen, umfasst einen Heizbereich, in dem eingefüllte Kunststoffbröckchen erwärmt werden können, und eine Heizeinrichtung, die geeignet ist, Wärme in den Heizbereich zu leiten, wobei die Vorrichtung weiterhin in den Heizbereich einbringbare Füllkörper umfasst, die geeignet sind, aufgenommene Wärme im Heizbereich an die Kunststoffbröckchen abzugeben. Diese Vorrichtung liefert ein deutlich besseres Ergebnis hinsichtlich des Erwärmvorgangs der Kunststoffbröckchen und der Gleichmäßigkeit, mit der diese erwärmt werden, da die einbringbaren Füllkörper zusätzlich zur Oberfläche des Heizbereiches oder zu gegebenenfalls vorgesehenen Strahlungsquellen Wärme an die Kunststoffbröckchen abgeben, und sich dabei in Mitten des Kunststoffbröckchengemischs befinden können.

Es kann vorgesehen sein, dass die Füllkörper mit den Kunststoffbröckchen durch den Heizbereich hindurchführbar oder in dem Heizbereich verortet ausgebildet sind. Sind die Füllkörper so ausgebildet, dass sie mit den Kunststoffbröckchen durch den Heizbereich hindurchführbar sind, so kann ein möglichst lang anhaltender Wärmeaustausch mit den Kunststoffbröckchen realisiert werden. Im anderen Fall kann auf die gegebenenfalls notwendige Siebvorrichtung, die die Kunststoffbröckchen von den Füllkörpern trennt, verzichtet werden, was die gesamte Anordnung technisch einfacher umsetzbar macht.

In einer Ausführungsform ist vorgesehen, dass die Vorrichtung dadurch gekennzeichnet, dass der Heizbereich eine Heizschnecke umfasst. Heizschnecken können eine gute Wärmeverteilung auf Grund der ständigen Durchmischung der Kunststoffbröckchen erreichen, wodurch ständig eine andere Oberfläche des Kunststoffbröckchengemischs der beheizten Oberfläche der Heizschnecke zugewandt ist, und die Kunststoffbröckchen gleichmäßig erwärmt werden können. Außerdem kann so ein Transport der Kunststoffbröckchen durch den Heizbereich hindurch sichergestellt werden.

In einer Ausführungsform ist vorgesehen, dass die Heizeinrichtung wenigstens eines von einer Mikrowellenstrahlungsquelle, einer Infrarotstrahlungsquelle, einem Induktionsheizer, einem beheizbaren Innenflächenbereich des Heizbereichs umfasst, die geeignet sind, die Füllkörper aufzuheizen. Durch die unterschiedlichen Eigenschaften der Heizquellen, insbesondere der Reaktion der Kunststoffbröckchen auf Bestrahlung mit der entsprechenden Energie, können bestimmte Erwärmungsziele erreicht werden. So kann beispielsweise Strahlung zum Aufheizen der Füllkörper verwendet werden, die von den Kunststoffbröckchen nicht absorbiert wird, wodurch sichergestellt ist, dass die Kunststoffbröckchen nicht zu viel Wärme aufnehmen, und auf Grund der Verteilung der Füllkörper in den Kunststoffbröckchen dennoch eine gezielte Erwärmung durch Wärmeabgabe der Füllkörper erreicht werden kann.

In einer weiteren Ausführungsform entspricht die Dichte der Füllgutkörper der mittleren Dichte der Kunststoffbröckchen. So kann verhindert werden, dass die Füllkörper entweder nur auf der Oberfläche der Kunststoffbröckchen verteilt sind, oder zu weit in die Kunststoffbröckchen hinein rutschen.

In einer Weiterbildung der Erfindung sind die Füllkörper fest mit der Oberfläche des Heizbereichs verbunden. So kann eine effektive Wärmeweiterleitung an die Füllkörper erfolgen und durch sie eine vergrößerte Oberfläche des Heizbereichs erreicht werden, was das Erwärmresultat der Kunststoffbröckchen verbessert.

Weiterhin kann die Vorrichtung eine Mischeinrichtung umfassen, die im Heizbereich angeordnet ist und geeignet ist, Kunststoffbröckchen im Heizbereich zu mischen. Mit dieser Mischeinrichtung kann sichergestellt werden, dass die Füllkörper möglichst statistisch gleich verteilt im gesamten Kunststoffbröckchenstrom sind, was das Resultat der Erwärmung bei Kunststoffbröckchen erheblich verbessert.

Ferner kann die äußere Form der Füllkörper kantenlos und/oder eckenlos sein. So kann das Zurückbleiben von kleinen Kunststoffpartikeln, die auf Grund der Reibung der Füllkörper an den Kunststoffbröckchen von letzteren abgerieben werden könnten, verhindert werden, da eine kanten- und/oder eckenlose Form der Füllkörper zu weniger Abrasion führt.

In einer Ausführungsform ist die Vorrichtung dadurch gekennzeichnet, dass das Verhältnis A/V von Oberfläche zu Volumen der Füllkörper größer ist als das einer Kugel mit gleichem Volumen. Somit kann die Wärmeabgabe der Füllkörper optimiert werden.

In einer Weiterbildung der Vorrichtung ist eine Zuführeinrichtung vorgesehen, die geeignet ist, die Füllkörper den Kunststoffbröckchen zuzuführen und/oder eine Trennvorrichtung ist vorgesehen, die geeignet ist, die Füllkörper von den Kunststoffbröckchen zu trennen. Durch die Zuführeinrichtung können die Füllkörper zu gegebener Zeit dem Strom von Kunststoffbröckchen zugeführt werden, und die Trennvorrichtung ermöglicht es, den weiteren Recyclingprozess durchzuführen, wobei sichergestellt ist, dass keine oder nur eine verschwindend geringe Menge von Füllkörpern im Kunststoffstrom enthalten sind.

Unter Verwendung beispielsweise einer dieser Vorrichtungen lässt sich ein Verfahren zum Erwärmen von Kunststoffbröckchen verwirklichen, wobei die Kunststoffbröckchen in einen Heizbereich eingefüllt werden und eine Heizeinrichtung Wärme in den Heizbereich leitet, und wobei Füllkörper in den Heizbereich eingebracht werden, die aufgenommene Wärme im Heizbereich an die Kunststoffbröckchen abgeben. Dieses Verfahren gestattet eine schnellere und gleichmäßige Erwärmung von Kunststoffbröckchen.

In einer Ausführungsform des Verfahrens werden die Füllkörper mit den Kunststoffbröckchen durch den Heizbereich hindurch geführt oder sind in dem Heizbereich verortet. Werden die Füllkörper mit den Kunststoffbröckchen durch den Heizbereich hindurch geführt, kann die Wärmeübertragung möglichst lange stattfinden. Das Verorten der Füllkörper im Heizbereich stellt sicher, dass der Kunststoffstrom, der diesen Heizbereich oder die gesamte Vorrichtung verlässt keine oder nur eine geringe Anzahl von Füllkörpern enthält, wodurch der Recyclingprozess nicht nachhaltig beeinflusst wird.

Weiterhin kann das Verfahren beinhalten, dass die Kunststoffbröckchen durch eine Mischeinrichtung im Heizbereich gemischt werden. Die Mischeinrichtung kann eine statistische Gleichverteilung der Füllkörper im Kunststoffbröckchenstrom sicherstellen.

Es kann vorgesehen sein, dass Wärme mittels Mirkowellenstrahlungsquelle und/oder einer Infrarotstrahlungsquelle und/oder einem Induktionsheizer und/oder einem beheizbaren Innenflächenbereich des Heizbereichs in den Innenraum des Heizbereichs eingeleitet wird. Durch die Verwendung bestimmter Energiequellen für die Wärmezufuhr im Heizbereich kann sichergestellt werden, dass die Kunststoffbröckchen auf bestimmte Weise erwärmt werden.

Gemäß einer Ausführungsform des Verfahrens besitzen die Füllkörper ein Absorptionsmaximum im Mikrowellenbereich und/oder im Infrarotbereich. Diese Füllkörper nehmen durch die entsprechenden Strahlungsquellen möglichst viel Energie auf und können sie in Form von Wärme gleichmäßig an die Kunststoffbröckchen abgeben.

## Kurze Beschreibung der Figuren

Fig. 1:          Schematische Darstellung einer Vorrichtung zum Erwärmen von Kunststoffbröckchen

Fig. 2a und b:    Schematische Darstellung weiterer Ausführungsformen einer Vorrichtung zum Erwärmen von Kunststoffbröckchen

Fig. 3a-d:        Darstellung unterschiedlicher Ausführungsformen von Füllkörpern

## Ausführliche Beschreibung

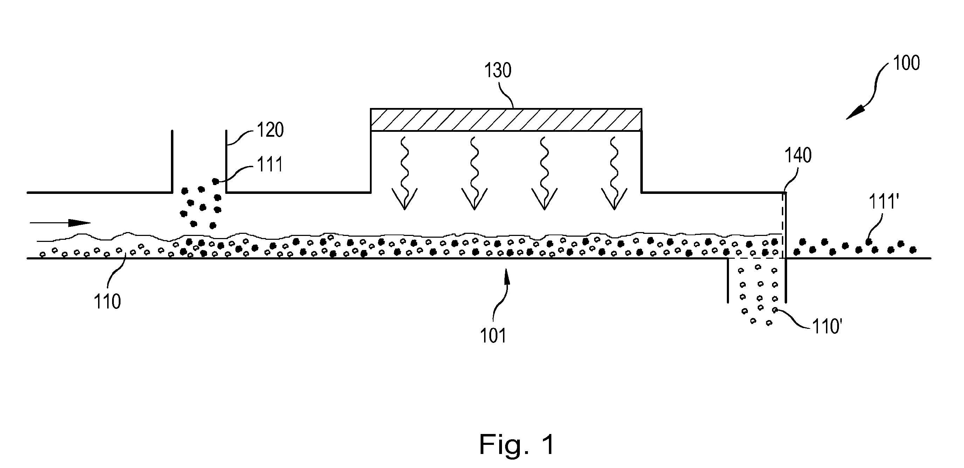

In Fig. 1 ist schematisch eine Vorrichtung 100 dargestellt, die zum Erwärmen von Kunststoffbröckchen, beispielsweise aus einem Kunststoffbröckchenstrom 110 verwendet wird. Dabei können die Kunststoffbröckchen sowohl Kunststoffflakes als auch Kunststoffpellets sein. Auch andere kleinere Kunststoffteilchen können mit der Vorrichtung prinzipiell verarbeitet werden. Die Vorrichtung umfasst einen Heizbereich 101, in den der Strom aus Kunststoffbröckchen 110 hineingeleitet wird. Dies kann beispielsweise mit Hilfe eines Förderers erreicht werden. In dem Heizbereich 101 ist eine Heizeinrichtung 130 vorgesehen, die die Kunststoffbröckchen erwärmen kann. Bei dieser Heizeinrichtung kann es sich um unterschiedlichste Energiequellen handeln. So kann es sich bei der Heizeinrichtung 130 beispielsweise um eine Mikrowellenstrahlungsquelle handeln, oder eine Infrarotstrahlungsquelle oder einen Induktionsheizer, oder es können die Innenwände des Heizbereichs 101 erwärmt werden, beispielsweise mit Hilfe von Heißwasser oder ähnlichem. Diese Wärme kann dann an die Kunststoffbröckchen 110 übertragen werden. Der Heizbereich 101 selbst kann als Reaktor ausgebildet sein, in dem dann die Erwärmung erfolgt, oder beispielsweise als Heizschnecke.

Dem Strom aus Kunststoffbröckchen 110 können Füllkörper 111 über eine Zuführeinrichtung 120 zugegeben werden. Bei dieser Zuführeinrichtung kann es sich um eine normale Zuleitung handeln, aus der dem Kunststoffbröckchenstrom 110 ein Strom von Füllkörpern 111 zugesetzt wird. Auf Grund der Bewegung des Kunststoffbröckchenstroms 110 verteilen sich die Füllkörper 111 in dem Kunststoffbröckchenstrom. Es ist vorgesehen, dass die Füllkörper 111 durch die von der Heizeinrichtung abgegebene Wärme im Heizbereich 101 Wärme aufnehmen und diese Wärme an die Kunststoffbröckchen 110 im Kunststoffbröckchenstrom abgeben. Die Füllkörper 111 sorgen dadurch auf Grund ihrer gesamten Oberfläche für eine erhöhte Wärmeabgabe an die Kunststoffbröckchen, verglichen mit einer Vorrichtung zum Erwärmen von Kunststoffbröckchen, die diese Füllkörper nicht umfasst. Dadurch kann erreicht werden, dass die Kunststoffbröckchen gleichmäßiger und vollständig erwärmt werden können.

Vorzugsweise werden die Kunststoffbröckchen 110', die in dem Heizbereich 101 durch die Heizeinrichtung 130 und die Füllkörper 111' erwärmt wurden, am Ende der Vorrichtung von den Füllkörpern 111' getrennt. Dafür kann beispielsweise eine Trennvorrichtung 140 in Form von Sieben unterschiedlicher Größe vorgesehen sein. Es kann beispielsweise vorgesehen sein, dass die Füllkörper 111 größer sind als die Kunststoffbröckchen 110. In einem solchen Fall kann die Trennvorrichtung als Sieb im Boden wie es in Fig. 1 dargestellt ist, vorgesehen sein, durch das die Kunststoffbröckchen 110 von den Füllkörpern 111 getrennt werden. Die Füllkörper können dann beispielsweise erneut verwendet werden oder entsorgt werden. Da die Kunststoffbröckchen 110' zumeist im Rahmen von Recyclingprozessen (dann häufig in Form von Flakes aus zerkleinerten Kunststoffflaschen) erwärmt werden, um sie zu neuen Flaschen verarbeiten zu können, ist vorgesehen, dass die Trennvorrichtung eine hohe Güte aufweist, in dem Sinne, dass die Trennung von Kunststoffbröckchen und Füllkörpern möglichst vollständig stattfindet, sodass die Eigenschaften der Füllkörper den weiteren Recyclingprozess der Kunststoffbröckchen 110' nicht negativ beeinflussen können. Hier sind auch andere Trennvorrichtungen denkbar. Beispielsweise kann vorgesehen sein, dass die Kunststoffbröckchen 111 auf magnetische oder elektrische Felder reagieren, wodurch sie am Ende der Vorrichtung 100 mit Hilfe starker Elektromagneten aus dem Kunststoffbröckchenstrom 110' herausgefiltert werden können, und somit Verunreinigungen der Kunststoffbröckchen 110' vermieden werden. Dazu kann dann in einer Ausführungsform vorgesehen sein, dass die Füllkörper metallischen Anteil aufweisen, der auf die elektromagnetischen Felder reagiert. Es können jedoch auch andere Materialien zum Einsatz kommen, die elektromagnetisch wechselwirken.

Die in Fig. 1 dargestellten Füllkörper 111 wurden in den Strom aus Kunststoffbröckchen eingeleitet und mit diesem durch die Vorrichtung zum Erwärmen der Kunststoffbröckchen hindurchgeführt, sodass sie insbesondere genau wie die Kunststoffbröckchen den Heizbereich 101 mit der Heizvorrichtung 130 passiert haben.

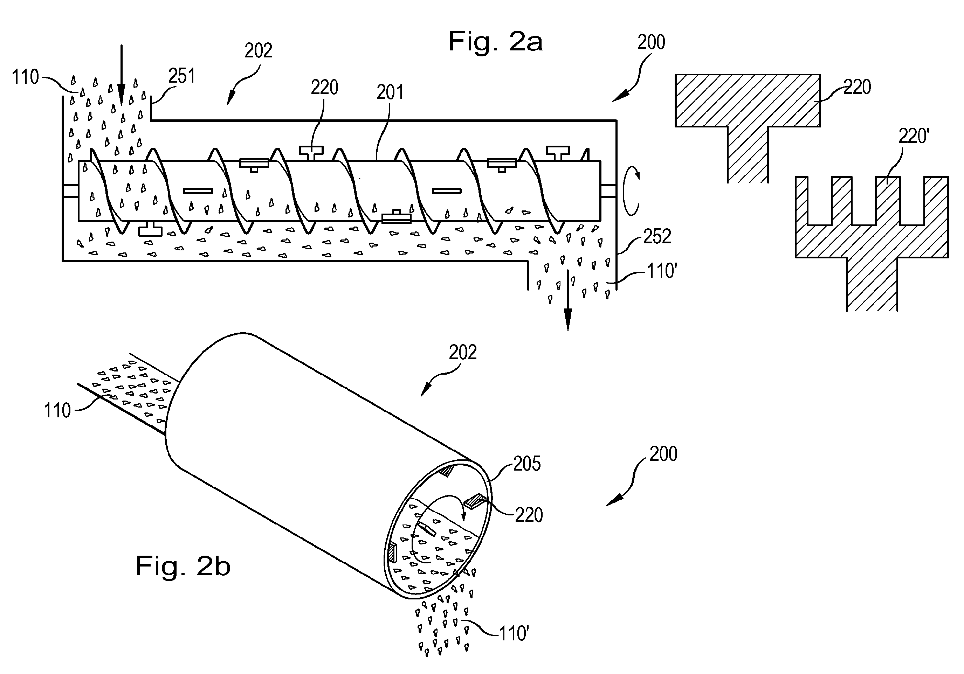

In Fig. 2a ist nun eine weitere Ausführungsform dargestellt, in der die Füllkörper fest mit der Heizeinrichtung verbunden sind. Die Vorrichtung 200 umfasst im Ausführungsbeispiel gemäß Fig. 2a eine Heizschnecke 201. Diese kann horizontal oder in Transportrichtung leicht abwärts geneigt angeordnet sein. Wird sie als Förderschnecke verwendet, so kann die Heizschnecke auch in Transportrichtung aufwärts geneigt sein. Die Heizschnecke 201 bildet mit dem umgebenden Gehäuse den Heizbereich 202. In diesen können die Kunststoffbröckchen 110 beispielsweise über die Zuführung 251 eingefüllt werden. Durch die Rotationsbewegung der Heizschnecke 201 werden die Kunststoffbröckchen dann durch den Heizbereich 202 transportiert und währenddessen durch den physischen Kontakt beispielsweise mit der Heizschnecke teilweise erwärmt. Die erwärmten Kunststoffbröckchen 110' können den Heizbereich über den Auslass 252 verlassen.

Die Füllkörper sind in dieser Ausführungsform fest mit der Heizschnecke 201 verbunden und in Form von Schaufeln oder Paddels 220 ausgebildet. Durch die Rotationsbewegung der Heizschnecke 201 geraten diese Füllkörper 220 dann wiederholt in den Strom aus Kunststoffbröckchen 110. Dadurch wird ein physischer Kontakt zwischen den Kunststoffbröckchen 110 und den Füllkörpern 220 hergestellt. Da die Füllkörper 220 physisch mit der Heizschnecke 201 verbunden sind (diese Verbindung kann entweder fest oder lösbar ausgebildet sein, um die Füllkörper austauschen zu können), haben die Füllkörper 220 ebenfalls eine erhöhte Temperatur und können die Kunststoffbröckchen 110 durch Wärmeaustausch erwärmen. Durch das Vorsehen der Füllkörper 220 an der äußeren Fläche der Heizschnecke 201 wird die effektive Oberfläche der Heizschnecke 201, die zum Erwärmen der Kunststoffbröckchen genutzt werden kann, erhöht. Außerdem können die Füllkörper 220 in den Strom aus Kunststoffbröckchen 110 eindringen, bzw. eintauchen, wodurch nicht nur eine Erwärmung der Oberfläche der Kunststoffbröckchen, die der Heizschnecke zugewandt ist, erzielt werden kann, sonder auch eine Erwärmung der Kunststoffbröckchen, die in tieferen Schichten des Stroms gelagert sind. Auf diese Weise kann eine vollständige Erwärmung sichergestellt werden. Die Ausbildung der Füllkörper als Schaufeln oder Paddel 220 gestattet außerdem eine deutlich bessere Durchmischung des Stroms aus Kunststoffbröckchen, wodurch die Oberfläche der Kunststoffbröckchen, die den Heizeinrichtungen (der Heizschnecke und den damit verbundenen Füllkörpern) zugewandt ist, permanent durchmischt wird, wodurch weiterhin die gleichmäßige Erwärmung der Kunststoffbröckchen verbessert wird. Es können so auch Verkohlungen oder Verklebungen mit der Heizeinrichtung vermieden werden.

Es kann auch vorgesehen sein, dass die Füllkörper in dieser Ausführungsform nicht als massive Bauteile, wie beispielsweise in Form einer durchgehenden Metallplatte ausgebildet sind, sondern es kann auch vorgesehen sein, dass die einzelnen Schaufeln 220 eine Gabelform aufweisen, das heißt also nicht als rechteckige Platte, sondern in gezackter Form 220- ausgebildet sind. Auf diese Weise kann die Durchmischung der Kunststoffbröckchen noch effektiver erfolgen, was das Endresultat der Erwärmung umgeändert weiter verbessern kann. Es kann auch vorgesehen sein, dass die Füllkörper 220, bzw. 220' gekrümmt oder gewellt sind, sodass die effektive Oberfläche der Füllkörper 220 oder 220' erhöht werden kann, was einen besseren Wärmeaustausch zur Folge hat.

Fig. 2b zeigt eine weitere Ausführungsform, bei der die Füllkörper 220 fest mit dem Heizbereich 202 verbunden sind. In diesem Ausführungsbeispiel ist der Heizbereich 202 durch eine rotierende Trommel 205 realisiert, die analog zur Heizschnecke in Transportrichtung leicht abgeschrägt oder angeschrägt angeordnet sein kann, um einen effektiven Durchfluss der Kunststoffbröckchen 110 zu gewährleisten oder die Kunststoffbröckchen effektiv zu transportieren. In diesem Ausführungsbeispiel sind die Füllkörper 220 dann nicht auf der Außenseite der Trommel 205 angeordnet, wie es bei der Heizschnecke gemäß Fig. 2a der Fall war, sondern auf der inneren Oberfläche der Trommel 205. So wird erreicht, dass sie in jedem Fall in den Kunststoffbröckchenstrom 110 eindringen und diesen vollständig durchmischen, da sie nicht nur mit der Oberfläche, die sich in Kontakt mit der Trommel befindet, in Kontakt treten. Je nach Form der Füllkörper 220 kann hier auch eine Mitnahme von Kunststoffbröckchen beabsichtigt sein, die dann oben auf den Strom von Kunststoffbröckchen 110 durch die Drehung der Füllkörper 220 fallengelassen werden. Damit wird ein noch besseres Resultat der Durchmischung der Kunststoffbröckchen erreicht, was insgesamt die gleichmäßige Erwärmung begünstigt. Auch in dieser Ausführungsform können die Füllkörper 220 wieder auf unterschiedliche Art und Weise realisiert werden. So können sie beispielsweise als ebene Metallplatten ähnlich wie in Fig. 2a oder in Form von Gabeln ausgeführt werden. Auch können sie eine innere Krümmung aufweisen, womit die Gesamtoberfläche, die für die Erwärmung von Kunststoffbröckchen zur Verfügung steht, erhöht wird.

Die Ausführungsformen des Heizbereichs als Heizschnecke oder Trommel können auch mit lose in den Kunststoffbröckchenstrom eingebrachten Füllkörpern (siehe Fig. 1) kombiniert werden.

In den Ausführungsformen gemäß Figuren 2a und 2b kann auch beabsichtigt sein, dass die Füllkörper 220 nicht starr mit den Heizrichtungen respektive Heizschnecke und Heiztrommel verbunden sind, sondern die Verbindung grundsätzlich lösbar ist. Das bedeutet, die einzelnen Füllkörper können beispielsweise durch ein Klicksystem oder mittels Verschraubungen mit den Heizeinrichtungen verbunden werden. Es kann auch vorgesehen sein, dass der Wärmeaustausch zwischen der Heizeinrichtung und den Füllkörpern nicht nur über den physischen Kontakt stattfindet, sondern für jeden Füllkörper eine separate Wärmezufuhr vorgesehen ist, oder Strahlungsquellen im Heizbereich 202 angeordnet sind, die die Füllkörper 220 selektiv, beispielsweise durch Eintrag bestimmter Strahlungen (Strahlung eines bestimmten Wellenlängenbereichs), erwärmen. Weiterhin kann zum Erzielen eines besseren Erwärmungsprofils des Stroms von Kunststoffbröckchen 110 vorgesehen sein, dass die Füllkörper 220 beweglich ausgebildet sind, dass sie beispielsweise rotieren können. Dadurch wird die Durchmischung der Kunststoffbröckchen verbessert und gleichzeitig eine größere effektive Oberfläche geschaffen.

Da die Füllkörper 220 grundsätzlich aus anderem Material als die Kunststoffbröckchen bestehen können, kann auch vorgesehen sein, dass der gesamte Heizbereich 202 von Strahlung durchflutet wird, die durch die Kunststoffbröckchen 110 nur schlecht absorbiert wird, von den Füllkörpern 220 jedoch sehr gut, sodass diese sich auf Grund der Bestrahlung aufheizen. Da die Füllkörper 220 wiederum die Wärme nur über physischen Kontakt an die Kunststoffbröckchen 110 abgeben, ist sichergestellt, dass keine Verkohlung durch Wärmeeintrag durch Strahlung erfolgt, die von den Kunststoffbröckchen nur an der Oberfläche absorbiert werden kann. Eine solche Erwärmung der Füllkörper 220 kann sich als konstruktiv deutlich einfacher erweisen, als für jeden Füllkörper, beispielsweise in der Heizschnecke 201 oder der Heiztrommel 205 eine entsprechende Wärmezufuhr in Form von beispielsweise Heißwasserleitungen vorzusehen.

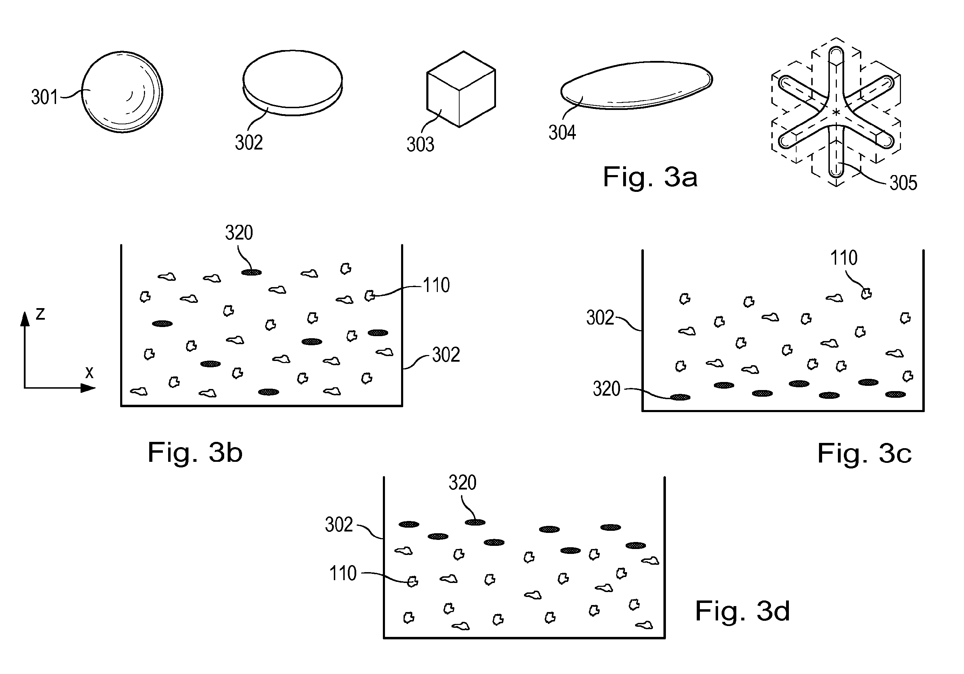

Fig. 3 zeigt Ausführungsformen der Füllkörper für die in Fig. 1 dargestellte Ausführungsform. In Fig. 3a sind unterschiedliche Ausführungsformen der Form der einzelnen Füllkörper dargestellt. Fertigungstechnisch einfach herzustellen sind regulär geformte Füllkörper, die aus Kunststoffen oder anderen Materialien bestehen, die leicht zerkleinert und in Form gebracht werden können. Diese haben jedoch unterschiedliche Größen, wodurch sie in einem Strom von Kunststoffbröckchen, gegebenenfalls auf Grund des Paranusseffekts in stark unterschiedlichen Tiefenschichten des Stroms aus Kunststoffbröckchen akkumulieren. Daher ist vorgesehen, dass die Füllkörper eine regelmäßige Form aufweisen, beispielsweise eine Kugelform 301. Der Vorteil der Kugel liegt darin, dass keine Beschädigung oder kein Abrieb der Kunststoffbröckchen auf Grund von Berührung mit den Füllkörpern auftreten, da Kugeln keine Kanten oder Ecken aufweisen, an denen es zu Abrieb der teilweise erwärmten Kunststoffbröckchen kommen kann. Auch weist die Kugel das geringste Verhältnis zwischen Oberfläche und Volumen auf, weshalb der erzielte Wärmeaustausch mit den Kunststoffbröckchen verglichen mit der Größe der Füllkörper nur gering ist. Auf diese Weise kann jedoch ein Verkohlen der Kunststoffbröckchen vermieden werden. Um eine sehr schnelle Wärmeübertragung an die Kunststoffbröckchen zu gewährleisten, müssten die Kugeln unverhältnismäßig groß verglichen mit der Größe der einzelnen Kunststoffbröckchen sein. Sind die Füllkörper jedoch erheblich größer als die einzelnen Kunststoffbröckchen, lagern sie sich auf Grund des Paranusseffekts vorzugsweise in einer Schicht über oder auf den Kunststoffbröckchen an, wenn das gesamte Gemisch beim Transport durch den Heizbereich geschüttelt oder durchrührt wird, wodurch nur eine einseitige Erwärmung der Kunststoffbröckchen stattfindet und der Wärmeeintrag nicht wie eigentlich beabsichtigt durch die Füllkörper in die Tiefe getragen wird. So können in vorteilhafter Weise auch andere geometrische Formen für die Füllkörper verwendet werden. Um die Umschichtung bzw. das Einlagern der Füllkörper in bestimmten Tiefenschichten aufgrund des Paranusseffekts zu verhindern, kann vorgesehen sein, dass die Durchmischung nur mit relativ geringen Geschwindigkeiten erfolgt, wodurch die Bewegung der einzelnen Kunststoffbröckchen und Füllkörper nur gering ist. Bei Verwendung eines Reaktors, insbesondere eines Schachtreaktors, kann dies erreicht werden.

So beispielsweise kleine zylinderförmige Plättchen 302. Diese weisen zum einen auf Grund der sie begrenzenden Kreisflächen große Oberflächen auf, über die Wärme an die Kunststoffbröckchen abgegeben werden kann, ähneln zum anderen aber in ihrer äußeren Form sehr den Kunststoffbröckchen selbst, weshalb sie sich bei entsprechend gewählter Dichte und Masse und Größe in dem Gemisch aus Kunststoffbröckchen gut verteilen können, vorzugweise sogar vollständig statistisch, sodass eine gleichmäßige Erwärmung der Kunststoffbröckchen erreicht werden kann. Analog können auch Quader oder Ellipsoiden 303, bzw. 304 verwendet werden. Die Quader weisen auf Grund ihrer ebenen Begrenzungsflächen große Oberflächen auf, mit denen ein Wärmeaustausch zwischen Füllkörper und Kunststoffbröckchen stattfinden kann, haben jedoch auf Grund ihrer kantigen Oberfläche den Nachteil, dass es gegebenenfalls zu Abrieb an den Kunststoffbröckchen kommen kann, wodurch sich einzelne Kunststoffpartikel in dem Heizbereich absetzten und verkleben können. Dieses Problem kann umgangen werden, indem Füllkörper verwendet werden, die zwar quaderförmig sind, wie in dem Schema-Bild 303 dargestellt, jedoch abgerundete Ecken und Kanten aufweisen.

Weiterhin können kompliziertere geometrische Formen verwendet werden, die sich insbesondere durch eine große Oberfläche auszeichnen, wodurch eine gute Wärmeabgabe an die Kunststoffbröckchen im umliegenden Kunststoffstrom realisiert werden kann. Es sind Körper bevorzugt, die sich besonders gut statistisch in einem ständig durchmischten Strom von Kunststoffbröckchen verteilen können. So können die Füllkörper beispielsweise die mit 305 bezeichnete Form aufweisen. Dabei handelt es sich im Wesentlichen um ein dreidimensional ausgebildetes Kreuz mit sechs Armen. Da kantige Oberflächen jedoch auf Grund von Abrasion an den Kunststoffbröckchen nachteilig sind, ist das dreidimensionale Kreuz 305 aus abgerundeten Armen zusammengesetzt, sodass die gesamte Struktur keine Kanten oder Ecken aufweist. Diese dreidimensionale Kreuzstruktur weist eine erheblich größere Oberfläche auf, als regelmäßige geometrische Strukturen wie eine Kugel oder ein Quader mit gleichem Volumen. Das für die Wärmeabgabe relevante Verhältnis $\frac{A}{V}$ von Oberfläche zu Volumen ist hier daher günstiger und gestattet schnellen Wärmeaustausch. Es ist daher für die Erwärmung der Kunststoffbröckchen besonders geeignet. Jedoch kann es auf Grund der einzelnen Arme zu Verkantungen von Füllkörpern untereinander kommen, was in dem Gemisch aus Füllkörpern und Kunststoffbröckchen zu einer Akkumulation von Füllkörpern an einem bestimmten Punkt führen kann, wodurch sie dann letztlich in dem gesamten Strom absinken oder aufsteigen, was gegebenenfalls nachteilig für die gleichmäßige Erwärmung sein kann.

Weiterhin zeigt Fig. 3b eine weitere Eigenschaft der Füllkörper, deren Manipulation die Fähigkeit, die Kunststoffbröckchen zu erwärmen, beeinflussen kann. Je größer die Füllkörper, desto mehr wird eine Akkumulation von Füllkörpern in einer oberflächennahen Schicht oder über den Kunststoffbröckchen während des Durchmischens stattfinden, da auf Grund des Paranusseffekts die kleineren Kunststoffbröckchen die entstehenden Zwischenräume beim Durchmischen oder durch Rütteln besetzen. Andererseits, kann durch eine geeignete Materialwahl eine Menge von Füllkörpern erzeugt werden, die auf Grund ihrer Dichte in dem gesamten Strom aus Kunststoffbröckchen und Füllkörpern nach unten rutschen.

Im Idealfall ist vorgesehen, dass auf Grund der Form, der Dichte und der Größe der Füllkörper die Verteilung der Füllkörper in dem Kunststoffbröckchenstrom derart erfolgt, dass die Füllkörper statistisch gleich verteilt über die Gesamtausdehnung des Kunststoffbröckchenstroms sind. So kann eine möglichst ideale Erwärmung des gesamten Kunststoffbröckchenstroms durch die Füllkörper gewährleistet werden. Dies ist beispielsweise in Fig. 3b dargestellt. Die Kunststoffbröckchen 110 und die Füllkörper 320 verteilen sich im Heizbereich wie hier dargestellt, sowohl in vertikaler Richtung (z-Achse), als auch in horizontaler Richtung (x-Achse) gleichmäßig.

Kann jedoch beispielsweise durch die Heizeinrichtung selbst gewährleistet werden, dass ein Teil der Kunststoffbröckchen bereits hinreichend erwärmt wird, so kann es in einigen Ausführungsformen tatsächlich vorteilhaft sein, wenn es zu einer Akkumulation der Füllkörper beispielsweise auf Grundlage des Paranusseffekts oder höherer/niedrigerer Dichte kommt. So zeigt Fig. 3c Füllkörper, die auf Grund ihrer höheren Dichte in dem Gemisch aus Kunststoffbröckchen und Füllkörpern nach unten sinken. So kann erreicht werden, dass die Kunststoffbröckchen auch beispielsweise von einer von der Heizvorrichtung abgewandten Seite aus erwärmt werden. Analog zeigt Fig. 3d den Fall, in dem die Füllkörper entweder auf Grund ihrer Größe oder ihrer verglichen mit den Kunststoffbröckchen geringeren Dichte auf den Kunststoffbröckchen 110 akkumulieren. So kann eine Erwärmung der Kunststoffbröckchen von oben erfolgen. Ein Einsatz entsprechender Füllkörper könnte beispielsweise zusätzlich in der Ausführungsform gemäß Fig. 2b genutzt werden, um die Erwärmung der oberen Schichten zu verbessern. Da die Füllkörper in jedem Fall leicht in die Kunststoffbröckchen einsinken werden, da die Kunststoffbröckchen keine feste Oberfläche bilden, erfolgt nicht nur eine flächenmäßige Erwärmung, sondern es kommt auch zu einem Wärmeübertrag in tiefer liegende Schichten.

Grundsätzlich ist eine besonders bevorzugte Form für die Füllkörper eine Form, die den durchschnittlichen Kunststoffbröckchen in Größe und äußerer Gestalt entspricht. Die Füllkörper haben also in jeder Richtung (Länge, Breit, Höhe) maximale Abmessungen von wenigen Millimetern bis hin zu einigen Zentimetern. Beispielsweise können die Füllkörper zylindrisch ausgebildet sein und einen Radius von 1-2cm und eine Höhe von 1-3mm aufweisen. Wird auch die Dichte, des für die Füllkörper verwendeten Materials entsprechend gewählt, besitzt zwar gegebenenfalls das Verhältnis von Oberfläche zu Volumen nicht den idealen Wert für den Wärmeeintrag in die Kunststoffbröckchen, jedoch kann so eine perfekte Durchmischung oder eine möglichst ideale Durchmischung von Füllkörpern und Kunststoffbröckchen realisiert werden. Alle von dieser Form abweichenden Form, können bestimmte Anforderungen erfüllen, beispielsweise für eine besonders schnelle Wärmeabgabe an die Kunststoffbröckchen sorgen, wenn die Oberfläche im Verhältnis zum Volumen sehr groß ist. Die beschriebenen Formen von lose im Kunststoffbröckchenstrom verteilten oder mit dem Heizbereich oder der Heizvorrichtung verbundenen Füllkörper sind in diesem Sinne nur als Beispiele zu verstehen. Auch andere Formen, insbesondere irreguläre, sind denkbar und können je nach Anforderung genutzt werden.

Liste weiterer bevorzugter Ausführungsformen der Erfindung

    1. Vorrichtung (100) zum Erwärmen von Kunststoffbröckchen(110), umfassend einen Heizbereich (101), in dem eingefüllte Kunststoffbröckchen (110) erwärmt werden können, und eine Heizeinrichtung (130), die geeignet ist, Wärme in den Heizbereich (101) zu leiten, wobei die Vorrichtung (100) weiterhin in den Heizbereich (101) einbringbare Füllkörper (111) umfasst, die geeignet sind, aufgenommene Wärme im Heizbereich an die Kunststoffbröckchen (110) abzugeben.

    2. Vorrichtung (100) nach Ausführungsform 1, wobei die Füllkörper (111) mit den Kunststoffbröckchen (110) durch den Heizbereich (101) hindurchführbar oder die Füllkörper (220) in dem Heizbereich (202) verortet ausgebildet sind.

    3. Vorrichtung nach Ausführungsform 1 oder 2, dadurch gekennzeichnet, dass der Heizbereich (202) eine Heizschnecke (201) umfasst.

    4. Vorrichtung nach einer der Ausführungsformen 1 bis 3, dadurch gekennzeichnet, dass die Heizeinrichtung wenigstens eines von einer Mikrowellenstrahlungsquelle, einer Infrarotstrahlungsquelle, einem Induktionsheizer, einem beheizbaren Innenflächenbereich des Heizbereichs umfasst, die geeignet sind, die Füllkörper aufzuheizen.

    5. Vorrichtung nach einer der Ausführungsformen 1 bis 4, dadurch gekennzeichnet, dass die Dichte der Füllgutkörper der mittleren Dichte der Kunststoffbröckchen entspricht.

    6. Vorrichtung nach einer der Ausführungsformen 1 bis 4, dadurch gekennzeichnet, dass die Füllkörper (220) fest mit der Oberfläche des Heizbereichs (202) verbunden sind.

    7. Vorrichtung nach einer der Ausführungsformen 1 bis 6, dadurch gekennzeichnet, dass die Vorrichtung eine Mischeinrichtung umfasst, die im Heizbereich angeordnet ist und geeignet ist, Kunststoffbröckchen im Heizbereich zu mischen.

    8. Vorrichtung nach einer der Ausführungsformen 1 bis 7, dadurch gekennzeichnet, dass die äußere Form der Füllkörper kantenlos und/oder eckenlos ist.

    9. Vorrichtung nach einer der Ausführungsformen 1 bis 8, dadurch gekennzeichnet, dass das Verhältnis A/V von Oberfläche zu Volumen der Füllkörper größer ist als das einer Kugel mit gleichem Volumen.

    10. Vorrichtung (100) nach einer der Ausführungsformen 1 bis 9, dadurch gekennzeichnet, dass eine Zuführeinrichtung (120) vorgesehen ist, die geeignet ist, die Füllkörper (111) den Kunststoffbröckchen (110) zuzuführen und/oder eine Trennvorrichtung (140) vorgesehen ist, die geeignet ist, die Füllkörper (111) von den Kunststoffbröckchen (110) zu trennen.

    11. Verfahren zum Erwärmen von Kunststoffbröckchen (110), wobei die Kunststoffbröckchen (110) in einen Heizbereich (101) eingefüllt werden und eine Heizeinrichtung (130) Wärme in den Heizbereich (101) leitet, und wobei Füllkörper (111) in den Heizbereich (101) eingebracht werden, die aufgenommene Wärme im Heizbereich an die Kunststoffbröckchen abgeben.

    12. Verfahren nach Ausführungsform 11, dadurch gekennzeichnet, dass die Füllkörper (111) mit den Kunststoffbröckchen (110) durch den Heizbereich (101) hindurch geführt werden oder Die Füllkörper (220) in dem Heizbereich (202) verortet sind.

13. Verfahren nach Ausführungsform 11 oder 12, dadurch gekennzeichnet, dass die Kunststoffbröckchen (110) durch eine Mischeinrichtung im Heizbereich gemischt werden.

14. Verfahren nach einer der Ausführungsformen 11 bis 13, dadurch gekennzeichnet, dass Wärme mittels Mirkowellenstrahlungsquelle und/oder einer Infrarotstrahlungsquelle und/oder einem Induktionsheizer und/oder einem beheizbaren Innenflächenbereich des Heizbereichs in den Innenraum des Heizbereichs eingeleitet wird.

15. Verfahren nach Ausführungsform 14, dadurch gekennzeichnet, dass die Füllkörper ein Absorptionsmaximum im Mikrowellenbereich und/oder im Infrarotbereich besitzen.

**Patentansprüche**

1. Vorrichtung (100) zum Erwärmen von Kunststoffbröckchen(110), umfassend einen Heizbereich (101), in dem eingefüllte Kunststoffbröckchen (110) erwärmt werden können, und eine Heizeinrichtung (130), die geeignet ist, Wärme in den Heizbereich (101) zu leiten, wobei die Vorrichtung (100) weiterhin in den Heizbereich (101) einbringbare Füllkörper (111) umfasst, die geeignet sind, aufgenommene Wärme im Heizbereich an die Kunststoffbröckchen (110) abzugeben, wobei die Füllkörper (220) in dem Heizbereich (202) verortet ausgebildet sind.

2. Vorrichtung nach Anspruch 1, **dadurch gekennzeichnet, dass** der Heizbereich (202) eine Heizschnecke (201) umfasst.

3. Vorrichtung nach einem der Ansprüche 1 oder 2, **dadurch gekennzeichnet, dass** die Heizeinrichtung wenigstens eines von einer Mikrowellenstrahlungsquelle, einer Infrarotstrahlungsquelle, einem Induktionsheizer, einem beheizbaren Innenflächenbereich des Heizbereichs umfasst, die geeignet sind, die Füllkörper aufzuheizen.

4. Vorrichtung nach einem der Ansprüche 1 bis 3, **dadurch gekennzeichnet, dass** die Dichte der Füllgutkörper der mittleren Dichte der Kunststoffbröckchen entspricht.

5. Vorrichtung nach einem der Ansprüche 1 bis 3, **dadurch gekennzeichnet, dass** die Füllkörper (220) fest mit der Oberfläche des Heizbereichs (202) verbunden sind.

6. Vorrichtung nach einem der Ansprüche 1 bis 5, **da-**

**durch gekennzeichnet, dass** die Vorrichtung eine Mischeinrichtung umfasst, die im Heizbereich angeordnet ist und geeignet ist, Kunststoffbröckchen im Heizbereich zu mischen.

7. Vorrichtung nach einem der Ansprüche 1 bis 6, **dadurch gekennzeichnet, dass** die äußere Form der Füllkörper kantenlos und/oder eckenlos ist.

8. Vorrichtung nach einem der Ansprüche 1 bis 7, **dadurch gekennzeichnet, dass** das Verhältnis A/V von Oberfläche zu Volumen der Füllkörper größer ist als das einer Kugel mit gleichem Volumen.

9. Verfahren zum Erwärmen von Kunststoffbröckchen (110), wobei die Kunststoffbröckchen (110) in einen Heizbereich (101) eingefüllt werden und eine Heizeinrichtung (130) Wärme in den Heizbereich (101) leitet, und wobei Füllkörper (111) in den Heizbereich (101) eingebracht werden, die aufgenommene Wärme im Heizbereich an die Kunststoffbröckchen abgeben, wobei die Füllkörper (220) in dem Heizbereich (202) verortet sind.

10. Verfahren nach Anspruch 9, **dadurch gekennzeichnet, dass** die Kunststoffbröckchen (110) durch eine Mischeinrichtung im Heizbereich gemischt werden.

11. Verfahren nach einem der Ansprüche 9 oder 10, **dadurch gekennzeichnet, dass** Wärme mittels Mirkowellenstrahlungsquelle und/oder einer Infrarotstrahlungsquelle und/oder einem Induktionsheizer und/oder einem beheizbaren Innenflächenbereich des Heizbereichs in den Innenraum des Heizbereichs eingeleitet wird.

12. Verfahren nach Anspruch 11, **dadurch gekennzeichnet, dass** die Füllkörper ein Absorptionsmaximum im Mikrowellenbereich und/oder im Infrarotbereich besitzen.

Fig. 1

EP 3 130 438 A1

Fig. 2a

Fig. 2b

EP 3 130 438 A1

Fig. 3a

Fig. 3b

Fig. 3c

Fig. 3d

EP 3 130 438 A1

**Europäisches Patentamt**
**European Patent Office**
**Office européen des brevets**

## EUROPÄISCHER RECHERCHENBERICHT

Nummer der Anmeldung

EP 16 18 7437

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 883 163 A (PEDER SOLHEIM) 21. April 1959 (1959-04-21) | 1-8 | INV. B29B13/02 |
| A | * Spalte 1, Zeile 15 - Zeile 20 * * Spalte 1, Zeile 38 - Zeile 41 * * Spalte 1, Zeile 61 - Spalte 2, Zeile 6 * * Spalte 2, Zeile 52 - Zeile 60 * * Abbildung 1 * | 9-12 | B29C47/82 F27D3/00 ADD. B29L31/00 |
| X | US 5 711 089 A (PIKUS ILYA [US]) 27. Januar 1998 (1998-01-27) * Spalte 1, Zeile 10 - Zeile 15 * * Spalte 1, Zeile 49 - Zeile 60 * * Spalte 2, Zeile 38 - Zeile 51 * * Spalte 3, Zeile 12 - Spalte 4, Zeile 38 * * Spalte 6, Zeile 8 - Zeile 14 * * Abbildungen 4, 5 * | 1-12 | |
| A | WO 2005/002824 A1 (LEE HYUN-SUK [KR]) 13. Januar 2005 (2005-01-13) * Seite 1, Zeile 6 - Zeile 11 * * Seite 5, Zeile 22 - Seite 6, Zeile 22 * * Seite 12, Zeile 4 - Zeile 16 * * Seite 13, Zeile 1 - Zeile 8 * * Abbildung 1 * | 1-12 | RECHERCHIERTE SACHGEBIETE (IPC) B29L B29B F28C B29C C09K F28F |

Der vorliegende Recherchenbericht wurde für alle Patentansprüche erstellt

| Recherchenort | Abschlußdatum der Recherche | Prüfer |
|---|---|---|
| München | 18. Oktober 2016 | Dias, Filipe |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 16 18 7437

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2016

| Im Recherchenbericht angeführtes Patentdokument | Datum der Veröffentlichung | Mitglied(er) der Patentfamilie | Datum der Veröffentlichung |
|---|---|---|---|
| US 2883163 A | 21-04-1959 | KEINE | |
| US 5711089 A | 27-01-1998 | KEINE | |
| WO 2005002824 A1 | 13-01-2005 | KEINE | |

EPO FORM P0461

Für nähere Einzelheiten zu diesem Anhang : siehe Amtsblatt des Europäischen Patentamts, Nr.12/82